**Europäisches Patentamt**

**European Patent Office**

**Office européen des brevets**

(19)

(11) Veröffentlichungsnummer: **0 182 143**
**B1**

(12) # EUROPÄISCHE PATENTSCHRIFT

(45) Veröffentlichungstag der Patentschrift:
**27.09.89**

(21) Anmeldenummer: **85113525.1**

(22) Anmeldetag: **24.10.85**

(51) Int. Cl.⁴: **B 09 B 1/00**

(54) Vorrichtung zur Steuerung des Gasabzuges aus einer Mülldeponie und Verfahren hierzu.

(30) Priorität: **10.11.84 DE 3441158**

(43) Veröffentlichungstag der Anmeldung:
**28.05.86 Patentblatt 86/22**

(45) Bekanntmachung des Hinweises auf die Patenterteilung:
**27.09.89 Patentblatt 89/39**

(84) Benannte Vertragsstaaten:
**AT BE CH DE FR GB IT LI LU NL SE**

(56) Entgegenhaltungen:
**DE-A- 2 719 889**
**DE-A- 3 131 100**

(73) Patentinhaber: **Schneider, Reinhard, Lonystrasse 9,**
**D-6300 Giessen (DE)**

(72) Erfinder: **Schneider, Reinhard, Lonystrasse 9,**
**D-6300 Giessen (DE)**

(74) Vertreter: **Jackisch, Walter, Dipl.-Ing. et al, Patentanwalt**
**W. Jackisch & Partner Menzelstrasse 40,**
**D-7000 Stuttgart 1 (DE)**

### Beschreibung

Die Erfindung betrifft eine Vorrichtung zur Steuerung des Gasabzuges aus einer Mülldeponie gemäss Oberbegriff des Anspruches 1 sowie ein Verfahren hierzu.

Bei der Lagerung von Müll entstehen durch Verrottung Zersetzungsgase, die zu einem grossen Teil aus Methangas bestehen. Methan ist ein brennbares Gas, das zu Bränden auf der Mülldeponie führen kann. Methan kann auch Explosionen auslösen. Dringt z. B. Methan in geschlossene Räume ein, so ist bei einem 5–15%igen $CH_4$-Anteil in der Luft Explosionsgefahr gegeben. Entweichen die Zersetzungsgase in das die Mülldeponie umgebende Erdreich, so schädigt das Methan die Pflanzen. Man ist daher bemüht, die Zersetzungsgase abzuführen und sie energetisch nutzbar zu machen oder abzufackeln.

Zur Vermeidung des Lufteintrittes in den Deponiemüll sind eine Vorrichtung und ein Verfahren bekannt (vgl. DE-A 2 719 889), bei dem das Zersetzungsgas aus den Gassammlern der Deponie, nämlich aus Gasbrunnen, bei mehreren verschiedenen Geschwindigkeiten abgesaugt wird und der Gasdruck in einem grösseren Umkreis von diesen Gasbrunnen gemessen und festgestellt wird, um die höchstzulässige Absauggeschwindigkeit, die etwa beim Druck 0 liegt, festzustellen. Hierzu ist in einem Umkreis von 120 bis 150 m eines jeden Gasbrunnens eine Vielzahl einzelner Sonden in verschiedener Tiefe in den Müll eingelassen, mit denen der Gasdruck mittels an den aus dem Müll herausstehenden Köpfen der Sonden angeordneten Manometern festgestellt wird. Auf diese Weise wird der Gasdruck in einem ausgewählten Gebiet der Mülldeponie, der ausserhalb der eigentlichen Gasbrunnen herrscht, ermittelt und als Grösse zur Bestimmung der Gasabsauggeschwindigkeit aus den Gasbrunnen benutzt, und zwar derart, dass ein Lufteintritt in den Müll verhindert wird.

In der DE-A 2 719 889 ist darüberhinaus erwähnt, den $O_2$-Gehalt des Zersetzungsgases durch Analysieren zu bestimmen und die Absauggeschwindigkeit des Zersetzungsgases bei einer bestimmten Höhe des Sauerstoffgehaltes herabzusetzen. Diese $O_2$-Messung ist, wie in der DE-A 2 719 889 erwähnt, jedoch unzweckmässig, da sie erst nach dem Lufteintritt in den Müll der Deponie stattfindet. Daher soll mittels der o.g. Drucksonden ein derartiger Lufteinbruch verhindert werden.

Demgegenüber liegt der Erfindung die Aufgabe zugrunde, eine Vorrichtung und ein Verfahren anzugeben, die es ermöglichen, dass die einzelnen Gasströme der Zersetzungsgase in ihren Hauptbestandteilen laufend kontrolliert werden, um einen Lufteinbruch sowie ein unkontrolliertes Austreten von Zersetzungsgasen aus der Deponie zu vermeiden und gleichzeitig eine etwa gleichbleibende Zusammensetzung der Bestandteile der Zersetzungsgase, insbesondere ihres Methangehaltes, zu gewährleisten, um dadurch für den Verbraucher eine gleichbleibende Qualität der Zersetzungsgase und damit eine optimale technische Nutzung zu ermöglichen.

Diese Aufgabe wird bei einer gattungsgemässen Vorrichtung mit den Merkmalen des Kennzeichens des Anspruches 1 gelöst. Ein Verfahren zur Steuerung des Gasabzuges aus einer Mülldeponie mit an unterschiedlichen Stellen mit Abstand voneinander im Müll angeordneten Gasbrunnen, aus denen die Zersetzungsgase in Einzelströmen abgesaugt, gesammelt und zum Verbraucher geleitet werden und das insbesondere mit einer Vorrichtung nach den vorhergehenden Ansprüchen durchführbar ist, ist im Anspruch 11 angegeben.

Nach der Erfindung lassen sich die Zersetzungsgase derart kontrolliert absaugen, dass einerseits ein Lufteinbruch mit den bekannten Nachteilen der Verminderung der Lebensbedingungen für die das verwertbare Methan freisetzenden Bakterien und ein unkontrolliertes Austreten der Zersetzungsgase mit den bekannten Nachteilen für die Umgebung und einer möglichen Explosionsgefahr vermieden werden. Gleichzeitig wird erreicht, dass die Bestandteile der Zersetzungsgase in ihrer qualitativen Zusammensetzung, insbesondere ihr Methangehalt, in engen Bereichen gleichgehalten werden können, so dass dem Verbraucher in seinen wesentlichen Bestandteilen etwa gleichbleibendes Zersetzungsgas zur Verfügung gestellt wird, das eine ausgezeichnete, optimale technische Nutzung ermöglicht.

Die Analyse der einzelnen Gasströme und die Steuerung der einzelnen abgesaugten Gasvolumenströme gewährleisten, dass aus einem Gassammler in Form eines Gas-Drainage-Rohrsystems oder in Form von Gasbrunnen, nur soviel Gas abgesaugt wird, wie die Bakterien produzieren. Dies gewährleistet ein Gas hoher Güte mit weitgehend gleichbleibendem Methangehalt, der unter Umständen auch relativ niedrig sein kann. Gerade die vorgebbare Gleichförmigkeit des Methangehaltes ist für viele Verbraucher entscheidend, da eine Anpassung mit den Zersetzungsgasen gespeister Gasmotoren, Brenner oder dgl. an unterschiedliche Güten des Gases entfallen kann.

Die Absperrorgane jeder einzelnen Gasabsaugleitung sind vorzugsweise im Bereich des Sammlers angeordnet, wobei die Sensoren in Strömungsrichtung vor oder hinter jedem Absperrorgan liegen können. Bestimmen die Sensoren als Messelemente den $O_2$- oder den $CH_4$- bzw. $CO_2$- oder $N_2$-Gehalt, so wird die Mess- und Regelvorrichtung bei Ansteigen beispielsweise des $O_2$-Gehaltes (z. B. bei Lufteinbruch) über einen vorgegebenen Grenzwert das dem Sensor zugeordnete Absperrorgan der gleichen Gasleitung in Schliessrichtung betätigen und den Volumenstrom des Gases drosseln bis beispielsweise der $O_2$-Gehalt wieder unter den Grenzwert gefallen ist. Fällt im Laufe der weiteren Gasabsaugung ein Gasbestandteil unter einen vorgegebenen minimalen Grenzwert, z. B. der $O_2$-Gehalt durch erhöhte Freisetzung an Zersetzungsgasen, so wird die Mess- und Regelvorrichtung das zugeordnete Absperrorgan in der gleichen Gasabsaugleitung weiter öffnen, um den abgesaugten Gasvolumenstrom zu erhöhen, bis der vorgegebene minimale Grenzwert wieder überschritten wird. Dieser Mess- und Regelvorgang wird in gleicher Weise für die Bestandteile Stickstoff, Kohlendioxyd und Methan gesteuert.

Eine von der Anlage der Mülldeponie unabhängige, besonders vorteilhafte Anordnung ergibt sich, wenn die Absaugleitungen einer gemeinsamen Fördervorrichtung zugeordnet sind, an die auch die Druckleitung zu den Verbrauchern angeschlossen ist und der Sammler mit Fördervorrichtung und gegebenenfalls die Mess- und Regelvorrichtung in einem Gebäude, vorzugsweise einem Stahlcontainer, ausserhalb der Deponie angeordnet sind.

Die der Mess- und Regelvorrichtung gemeldeten Daten sind über eine externe Leitung vorzugsweise digitalisiert einer Betriebszentrale zuführbar. In einer derartigen, unter Umständen 100 km bis 500 km entfernten Betriebszentrale können mehrere Deponie-Steuerzentralen überwacht werden, die im wesentlichen aus der Mess- und Regelvorrichtung mit den zugeordneten Sensoren und Absperrorganen besteht. Insbesondere ist mit der Mess- und Regelvorrichtung eine Alarmeinrichtung verbindbar, die vorzugsweise in das Gehäuse der Mess- und Regelvorrichtung integriert ist. Das Alarmsignal kann ebenfalls unmittelbar der Betriebszentrale übermittelt und dort angezeigt werden.

Die Deponie-Steuerzentrale ist vorzugsweise in dem Stahlcontainer angeordnet, der in vorgebbarer Entfernung von der Mülldeponie an günstiger Stelle abgesetzt werden kann. Auf diese Weise ist die Steuerzentrale unter anderem insbesondere in Störfällen leicht auswechselbar, so dass das Absaugen der Zersetzungsgase aus der Mülldeponie ohne grössere Unterbrechung fortwährend gesichert ist. Ferner können die Container vorteilhaft werkseitig vollständig installiert werden.

Weitere Merkmale sowie Weiterbildungen der Erfindung sind in den weiteren Ansprüchen enthalten. Die Zeichnung zeigt ein Ausführungsbeispiel der Erfindung, welches im folgenden näher beschrieben wird. Es zeigen

Fig. 1 im Schnitt eine Mülldeponie mit Gasbrunnen und einer Steuerzentrale,

Fig. 2 im Schnitt ein anderes Ausführungsbeispiel einer Steuerzentrale in einem Container.

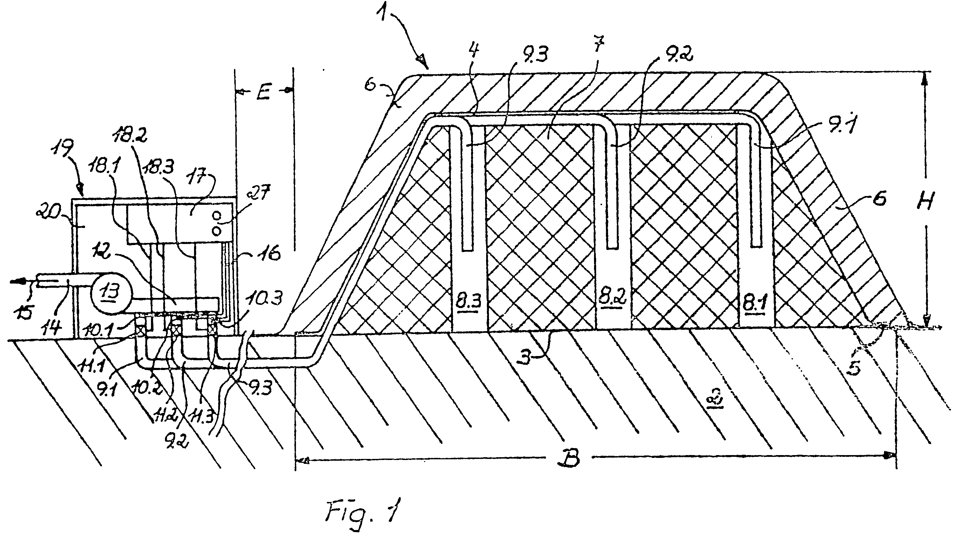

Die in Fig. 1 gezeigte Mülldeponie 1 ist auf vorzugsweise planiertem Boden 2 aufgeschüttet. Auf dem Boden ist eine weitgehend gasdichte, vorzugsweise aus PVC bestehende, Bodenplane 3 ausgebreitet, auf die der Müll 7 aufgeschüttet wird. Der aufgeschüttete Müllberg ist mit einer ebenfalls weitgehend gasdichten, vorzugsweise aus PVC gefertigten, Abdeckplane 4 abgedeckt, wobei die Ränder 5 der Planen 3 und 4 miteinander gasdicht verklebt oder verschweisst werden, so dass eine im wesentlichen gasdichte Kammer für den Müll 7 gebildet ist. Auf die Abdeckplane ist eine Erdabdeckung 6 aufgebracht.

Die Mülldeponie 1 hat eine Höhe H von ca. 10 m bis 50 m, wobei die Erdabdeckung 6 eine Stärke von etwa 1 m bis 2 m hat. Die Seitenwände der Deponie 1 haben vorzugsweise einen Böschungswinkel von ca. 35°. Die unmittelbar über den Boden 2 gemessene Breite B der Mülldeponie 1 beträgt ca. 100 m bis 500 m.

Es kann vorteilhaft sein, zwischen den Müll 7 und den Planen 3 und 4 eine etwa 10 cm bis 40 cm dicke Kies- oder Sandschicht vorzusehen, um einerseits die Planen 3 und 4 vor mechanischen Schäden zu schützen und andererseits für eine gleichmässige Verteilung des Gasinnendrucks der Kammer auf die Planen zu gewährleisten.

In der Mülldeponie 1 sind vorzugsweise senkrechte, über die ganze Höhe des Müllbergs reichende Gasbrunnen 8 als Gassammler 8 vorgesehen. Die Anzahl der Gasbrunnen 8 wird entsprechend der Grösse der Deponie, der Art des Mülls 7 und der voraussichtlich anfallenden Menge an Zersetzungsgasen gewählt. Im gezeigten Ausführungsbeispiel sind in dem gezeigten Schnitt drei Gasbrunnen mit Abstand nebeneinander angeordnet, die im einzelnen mit 8.1, 8.2 und 8.3 bezeichnet sind. Jedem der Gasbrunnen 8 ist eine Gasabsaugleitung 9 bzw. 9.1, 9.2, 9.3 zugeordnet, deren eines Ende etwa zentrisch bis etwa auf halbe Höhe in einen Gasbrunnen 8 hineinragt. Als Gassammler können auch horizontale Drainagen vorgesehen sein.

Im gezeigten Ausführungsbeispiel verlaufen die einzelnen Gasabsaugleitungen 9.1 bis 9.3 knapp unterhalb der Abdeckplane 4 längs der Decke und einer Böschung der Mülldeponie 1 und sind ins Erdreich des Bodens 2 geführt, wozu sie gasdicht durch die Bodenplane 3 im Bereich ihres Randes durchgeführt sind. Die Leitungen 9.1 bis 9.3 sind im Ausführungsbeispiel nach Fig. 1 in der Schnittebene hintereinanderliegend angeordnet. Es kann zweckmässig sein, die Leitungen in der Schnittebene übereinanderliegend zu führen.

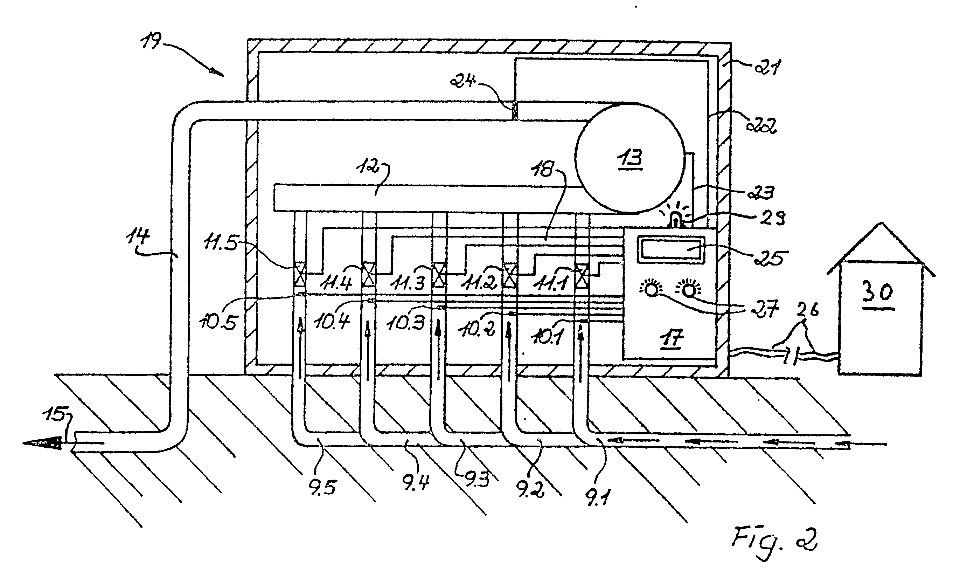

Die Gasabsaugleitungen 9 sind – vorzugsweise im Erdreich liegend – einer Steuerzentrale 19 zugeführt, die in einem im frei wählbaren Abstand E von der Mülldeponie 1 errichteten Gebäude 20 oder einem abgesetzten Container 21 (Fig. 2) vorgesehen ist. Das Gebäude bzw. der Container ist vorzugsweise nahe der Mülldeponie aufgestellt. Die Leitungen 9 sind von unten in das Gebäude 20 bzw. den Container 21 geführt und münden über Absperrorgane 11 bzw. 11.1, 11.2, 11.3 in einen rohrförmigen Sammler 12. Mittels einer Fördervorrichtung 13 (eine Pumpe, ein Gebläse, ein Kompressor oder dgl.) werden die Zersetzungsgase aus dem Gasbrunnen 8 abgesaugt und über eine Druckleitung 14 in Pfeilrichtung 15 einem Verbraucher zur technischen Nutzung zugeführt.

Die Gasabsaugleitungen 9 bestehen vorzugsweise aus PVC und haben einen Durchmesser von 60 mm bis 150 mm. Die von der Fördervorrichtung 13 beschickte Druckleitung 14 zum Verraucher hat vorzugsweise einen Durchmesser von etwa 100 mm bis 300 mm.

Das bei der Zersetzung des Mülls entstehende Gas hat einen hohen Anteil an Methan und dringt durch die gasdurchlässigen Wandungen der Gasbrunnen 8 in diese ein und wird durch Unterdruck abgesaugt. Bei zu hohem Unterdruck wird durch die nicht immer dichten Abdeckungen (Erdabdeckung oder Planen 3 und 4) Umgebungsluft und damit Sauerstoff in den Müll 7 angesaugt, was für die das Methangas freisetzenden Bakterien schädlich ist, da der Sauerstoff ihre Lebensbedingungen einschränkt oder gar vernichtet. Der Liefergrad an Methangas kann hierbei beträchtlich sinken.

Strömt hingegen mehr Zersetzungsgas in einen Gasbrunnen 8.1 ein als durch seine zugeordnete Leitung 9.1 mittels Unterdruck abgesaugt wird, so besteht die Gefahr, dass das Gas durch die nicht immer dichte Abdeckung (Planen 3 und 4) unkontrolliert in das umgebende Erdreich und die Umgebungsluft entweicht. Zusammen mit einem bestimmten Anteil Sauerstoff der Umgebungsluft bildet das Methan ein explosives Gemisch, was die Umgebung (geschlossene Räume, z. B. Keller von Gebäuden, die bis ca. 300 m von Deponien bestehen) gefährdet. Das in das Erdreich einströmende Methan schädigt umstehende Pflanzen.

In der in Fig. 1 dargestellten Steuerzentrale 19 sind in Strömungsrichtung des Gases hinter den als Regelventile ausgebildeten Absperrorganen 11.1, 11.2 und 11.3 in jeder Leitung 9 je ein Sensor 10.1, 10.2 und 10.3 angeordnet, der z.B. die Konzentration an Stickstoff (N), Kohlendioxyd ($CO_2$), Methan ($CH_4$), vorzugsweise die Sauerstoffkonzentration ($O_2$) der durchströmenden Zersetzungsgase misst. Die Sensoren 10 geben der N-, $CO_2$-, $CH_4$- bzw. $O_2$-Konzentration entsprechende Signale ab, die über elektrische Leitungen 16 einer Mess- und Regelvorrichtung 17 zugeführt sind. Diese Mess- und Regelvorrichtung 17 steuert in Abhängigkeit der ermittelten Messwerte über Steuerleitungen 18 die Regelventile 11, um automatisch den Volumenstrom der aus einem Gasbrunnen 8 abgesaugten Zersetzungsgase zu regeln.

Die Ausgangssignale der Sensoren 10 können kontinuierlich von der Mess- und Regelvorrichtung 17 erfasst werden, um sofort entsprechende Gegenmassnahmen einzuleiten (geschlossene Regelschleife). Es kann aber zur Verminderung des elektronischen Aufwandes in der Mess- und Regelvorrichtung 17 vorteilhaft sein, die Sensoren innerhalb bestimmter Zeitintervalle nur einmal abzufragen und über die entsprechenden Steuerleitungen 18 das entsprechende Regelventil 11 zu betätigen.

So ermittelt der Sensor 10.1 z.B. den Sauerstoffgehalt ($O_2$-Gehalt) der abgesaugten Zersetzungsgase und meldet diesen über eine elektrische Leitung 16 der Mess- und Regelvorrichtung 17. Sobald der vorgegebene Grenzwert für $O_2$ in der Leitung überschritten wird, verringert die Mess- und Regelvorrichtung 17 über das entsprechende Regelventil 11 den Durchtrittsquerschnitt der zugeordneten Gasleitung 9, wodurch die abgesaugte Gasmenge reduziert wird, bis der Sauerstoffgehalt wieder unter den vorgegebenen maximalen Grenzwert fällt.

Fällt der vom Sensor 10 ermittelte $O_2$-Gehalt unterhalb eines vorgegebenen minimalen Grenzwertes, so veranlasst die Mess- und Regelvorrichtung 17 ein Öffnen des zugeordneten Regelventils 11, um die abgesaugte Gasmenge zu erhöhen, bis der ermittelte $O_2$-Wert wieder im Bereich der vorgegebenen Grenzwerte liegt.

Auf diese Weise wird der $O_2$-Gehalt des abgesaugten Zersetzungsgases innerhalb vorgegebener Grenzwerte gehalten, wodurch die Qualität des abgesaugten Gases, d.h. sein Anteil an Methan ($CH_4$), relativ hoch und konstant gehalten werden kann. Das abgesaugte Gas kann daher vom Verbraucher technisch optimal genutzt werden.

Darüber hinaus ist ferner gewährleistet, dass weder den Zersetzungsprozess im Müll bremsende und die Methangasproduktion senkende Lufteinbrüche auftreten, noch Methangas unkontrolliert in die Umgebung oder in das Erdreich austreten kann.

Wahlweise oder zusätzlich zu der Ermittlung des $O_2$-Gehaltes wird z.B. der N-Gehalt (Stickstoffgehalt), $CO_2$- oder $CH_4$-Gehalt erfasst und anhand dieser Grössen die abgesaugte Gasmenge gesteuert.

Die als Vergleichswerte vorzugebenden Grenzwerte (maximaler und minimaler Grenzwert) werden über Eingabeglieder 27 an der Mess- und Regelvorrichtung 17 eingestellt. Mit der Mess- und Regelvorrichtung 17 können darüber hinaus Fehler erkannt werden. So kann ein Lufteinbruch in einen Gasbrunnen durch permanentes Überschreiten des vorgegebenen $O_2$-Grenzwertes erkannt werden, da trotz von der Mess- und Regelvorrichtung 17 eingeleiteter Gegenmassnahmen (Schliessen des Regelventils) der $O_2$-Wert nicht unter den vorgegebenen maximalen Grenzwert absinken wird.

In Fig. 2 ist ein Stahlcontainer 21 gezeigt, der mit entsprechenden Anschlüssen für die vorgesehenen elektrischen Leitungen und Gasleitungen versehen ist. Der Container 21 kann so an jeden beliebigen Einsatzort gebracht werden, ohne dass umfassende Baumassnahmen erforderlich sind. Der Container kann in einem Werk betriebsbereit hergestellt werden.

Im Ausführungsbeispiel nach Fig. 2 sind fünf Gasabsaugleitungen 9.1 bis 9.5 gezeigt, über die die Zersetzungsgase aus nicht gezeigten Gasbrunnen gemäss Fig. 1 abgesaugt werden. Wie beim Ausführungsbeispiel nach Fig. 1 sind in jeder Leitung vor Eintritt in den röhrförmigen Sammler 12 Regelventile 11.1 bis 11.5 angeordnet. Die Sensoren zur Ermittlung des $O_2$-Gehaltes (N-Gehalt usw.) sind hier in Strömungsrichtung vor den Ventilen angeordnet. Die Steuerung der Gasabsaugung erfolgt wie bereits beschrieben.

Die Mess- und Regelvorrichtung 17 ist ferner mit einer Anzeige 25 versehen, über die die Menge und der Energiegehalt des in der Druckleitung 14 geförderten Gases angezeigt werden kann. Die Mess- und Regelvorrichtung erhält die hierzu erforderlichen Werte von einem in der Druckleitung angeordneten Durchflussmessgerät 24, dessen Ausgangssignal über eine Leitung 22 der Mess- und Regelvorrichtung 17 zugeführt ist.

In Weiterbildung der Erfindung ist vorgesehen, die von den Sensoren 10.1 bis 10.5 ermittelten Werte und/oder die Menge des geförderten Gases über eine Leitung 26 einer nicht dargestellten Betriebszentrale zuzuführen, die mehrere Steuerzentralen 19 überwacht und die von ihnen gemeldeten Werte für statistische Auswertungen, Verbrauchsermittlung etc. speichert und weiterverarbeitet. Anhand der übermittelten Daten können von der Betriebszentrale auch Fehler erkannt werden. Die Betriebszentrale kann z.B. ohne weiteres 100 km bis 500 km oder weiter von der Mülldeponie 1 entfernt liegen, da nur elektrische Signale zu übertragen sind. Zur störungsfreien Übermittlung kann es vorteilhaft sein, die Signale zu digitalisieren. Die in der Steuerzentrale 19 anfallenden Messwerte werden vorzugsweise gespeichert und z.B. nur einmal am Tag oder in anderen frei wählbaren Zeitintervallen der Betriebszentrale fernübermittelt. In topographisch ungünstigen Verhältnissen kann es zweckmässig sein, die Daten statt über eine Leitung 26 über Funk der Betriebszentrale zu übersenden.

Ferner ist es vorteilhaft, entsprechend der vom Verbraucher geforderten Gasmenge die Förderleistung der Fördervorrichtung 13 anzupassen. Hierzu können über die Leitung 26 der Mess- und Regelvorrichtung 17 Förderleistungen vorgegeben werden. Die Mess- und Regelvorrichtung wird dann über die Steuerleitung 23 den Liefergrad der Fördervorrichtung 13 entsprechend variieren. Darüber hinaus kann durch eine Variation der Förderleistung auch der Abzug der Zersetzungsgase aus den Gasbrunnen 8 kumulativ gesteuert werden. So könnte mit der Fördervorrichtung 13 eine grobe Vorsteuerung des gesamten Gasstroms und mit den Regelventilen 11 eine feine Nachsteuerung jedes einzelnen Gasstroms einer Leitung 9 erfolgen.

Ein Sensor 10 kann in Strömungsrichtung einer Gasabsaugleitung 9 vor oder nach einem Regelventil 11 vorgesehen sein. Auch kann es vorteilhaft sein, den Sensor unmittelbar im oder am Gasbrunnen 8 anzuordnen und dessen elektrische Ausgangssignale über Leitungen, die vorzugsweise auch in der Gasabsaugleitung geführt werden können, der Mess- und Regelvorrichtung 17 in der Steuerzentrale 19 zuzuführen. Ferner kann es für bestimmte Anwendungsfälle zweckmässig sein, die Sensoren 10, die Mess- und Regelvorrichtung 17 und die Ventile 11 der Gasabsaugleitungen 9 sowie die Fördervorrichtung 13 in unmittelbarer Nähe der Mülldeponie 1 vorzusehen. Die mit den Sensoren 10, den Ventilen 11 und ggf. der Fördervorrichtung 13 elektrisch verbundene Mess- und Regelvorrichtung 17 kann dann entfernt in einer Steuerzentrale 19 eingerichtet sein. Auf diese Weise brauchen die Gasabsaugleitungen 9 nicht bis zur Steuerzentrale 19 geführt werden.

Es kann vorteilhaft sein, zur Steuerung des anaeroben Zerrottungsprozesses im Müll ein Rohrsystem zur Wärmezuführung (Warmwasser) vorzusehen. Auch kann ein Drainagesystem zur Be- und Entwässerung des in der Kammer eingeschlossenen Mülls 7 zweckmässig sein.

In dem Ausführungsbeispiel nach Fig. 1 sind mit Abstand nebeneinander angeordnete, vorzugsweise senkrechte Gasbrunnen 8 vorgesehen. Es kann zweckmässig sein, anstelle der Gasbrunnen voneinander getrennte Gas-Drainage-Rohrsysteme vorzusehen. So könnte es bei bestimmten Arten des Mülls vorteilhaft sein, voneinander getrennte Gas-Drainage-Rohrsysteme in unterschiedlichen Lagen der Mülldeponie vorzusehen. Jedes Gas-Drainage-Rohrsystem einer Lage wäre dann mit einer getrennten Absaugleitung zu verbinden, die wie im gezeigten Ausführungsbeispiel bis zu einer Steuerzentrale zu führen und entsprechend zu regeln ist.

**Patentansprüche**

1. Vorrichtung zum Absaugen von Zersetzungsgasen aus einer Mülldeponie mit eingelagertem Müll (7) und an unterschiedlichen Orten mit Abstand voneinander im Müll (7) angeordneten Gasbrunnen (8.1; 8.2; 8.3), wobei jeder Gasbrunnen eine Gasabsaugleitung (9.1; 9.2; 9.3) mit je einem Absperrorgan (11.1; 11.2; 11.3) aufweist, dadurch gekennzeichnet, dass die regelbaren Absperrorgane (11.1; 11.2; 11.3) jeder einzelnen Gasabsaugleitung (9.1 bis 9.3) einem ausserhalb der Deponie (1) befindlichen Sammler (12) zugeordnet sind und in jeder einzelnen Gasabsaugleitung (9.1 bis 9.3) mindestens ein Messelement (10.1; 10.2; 10.3) zur Ermittlung des Gehaltes eines charakteristischen Bestandteiles der Zersetzungsgase (Sauerstoff, Stickstoff, Kohlendioxyd, Methan) vorgesehen ist, und dass die Messelemente (10.1 bis 10.3) jeweils mit einer Mess- und Regelvorrichtung (17) verbunden sind, die in Abhängigkeit der von den Messelementen (10.1 bis 10.3) gelieferten Signale, die ihnen zugeordneten Absperrorgane (11.1 bis 11.3) steuert.

2. Vorrichtung nach Anspruch 1, dadurch gekennzeichnet, dass die Messelemente Sensoren (10.1; 10.2; 10.3) sind, die in Störmungsrichtung des Gasstromes vor oder hinter jedem Absperrorgan (11.1; 11.2; 11.3) angeordnet sind.

3. Vorrichtung nach einem der Ansprüche 1 oder 2, dadurch gekennzeichnet, dass die Sensoren (10.1; 10.2; 10.3) dem Sauerstoff-Gehalt und/oder dem Stickstoff-Gehalt bzw. Methan- oder Kohlendioxyd-Gehalt der geförderten Zersetzungsgase proportionale Ausgangssignale abgeben.

4. Vorrichtung insbesondere nach einem der Ansprüche 1 bis 3, dadurch gekennzeichnet, dass die einzelnen Absaugleitungen (9.1; 9.2 9.3) einer gemeinsamen Fördervorrichtung (13) zugeordnet sind, an die auch die zu den Verbrauchern führende Druckleitung (14) angeschlossen ist, und der Sammler (12), die Fördervorrichtung (13) und gegebenenfalls die Mess- und Regelvorrichtung (17) in einem ausserhalb der Deponie und von ihr unabhängigen Gebäude (20) angeordnet sind.

5. Vorrichtung nach Anspruch 4, dadurch gekennzeichnet, dass die Gasabsaugleitungen (9.1 bis 9.3) von unten in das Gebäude geführt sind.

6. Vorrichtung nach Anspruch 4 oder 5, dadurch gekennzeichnet, dass das Gebäude (20) als Container (21) ausgebildet ist.

7. Vorrichtung nach einem der Ansprüche 1 bis 6, dadurch gekennzeichnet, dass die Absperrorgane (11.1 bis 11.3) im Bereich des Sammlers (12) angeordnet sind.

8. Vorrichtung nach einem der Ansprüche 1 bis 7, dadurch gekennzeichnet, dass die Förderleistung der Fördervorrichtung (13) von der Mess- und Regelvorrichtung (17) nach vorgegebenen Kenndaten regelbar ist.

9. Vorrichtung nach einem der Ansprüche 1 bis 8, dadurch gekennzeichnet, dass das Volumen der über die Fördervorrichtung (13) vom Sammler (12) in die Druckleitung (14) eingespeiste Gas mittels eines Durchflussmessgerätes (24) erfassbar ist, dessen Ausgangssignale zur Verbrauchserfassung der Mess- und Regelvorrichtung (17) zugeführt sind und dass von dieser erfasste Daten über eine externe Leitung (26), vorzugsweise digitalisiert, einer Betriebszentrale (30) übermittelbar sind.

10. Vorrichtung nach einem der Ansprüche 1 bis 9, dadurch gekennzeichnet, dass die Förderleistung der Fördervorrichtung (13) von der Mess- und Regelvorrichtung (17) nach vorzugsweise über externe Leitungen (26) vorgegebenen Kenndaten regelbar ist und dass der Mess- und Regeleinrichtung (17) eine Alarmeinrichtung (29) zugeordnet ist, die vorzugsweise in das Gehäuse der Mess- und Regelvorrichtung (17) integriert ist.

11. Verfahren zur Steuerung des Gasabzuges aus einer Mülldeponie mit an unterschiedlichen Stellen mit Abstand voneinander im Müll angeordneten Gasbrunnen (8.1; 8.2; 8.3), aus denen die Zersetzungsgase in Einzelströmen abgesaugt, gesammelt und den Verbrauchern zugeleitet werden, insbesondere mit einer Vorrichtung nach den Ansprüchen 1 bis 8, dadurch gekennzeichnet, dass in jedem einzelnen Gasstrom der Gehalt charakteristischer Bestandteile der Zersetzungsgase (z.B. Sauerstoff, Stickstoff, Methan bzw. Kohlendioxyd) fortlaufend gemessen wird und die einzelnen Gasströme derart in Abhängigkeit von diesen gemessenen Anteilswerten gesteuert werden, dass bei Übersteigen eines vorgegebenen ersten Grenzwertes eines Bestandteiles des Zersetzungsgases der jeweilige einzelne Gasstrom gedrosselt und bei Unterschreiten eines zweiten vorgegebenen Grenzwertes der Gasstrom verstärkt wird, dass nach dieser Messung und Steuerung der einzelnen Gasströme diese in Abhängigkeit von den gemessenen Werten zusammengeführt werden und danach unter Druck zu den Verbrauchern gefördert werden.

**Claims**

1. Device for the extraction of gas produced by the decomposition of waste material (7) at a waste disposal site with gas wells (8.1, 8.2, 8.3) located at various points within the site, whereby each gas well is provided with a gas extraction line (9.1, 9.2, 9.3), each with its own shut-off valve (11.1, 11.2, 11.3), characterised in that the variable shut-off valves (11.1, 11.2, 11.3) of the individual gas extraction lines (9.1 to 9.3) are each connected to a collector (12) located outside the disposal site (1) and at least one measurement component (10.1, 10.2, 10.3) is provided in each individual gas extraction line (9.1 to 9.3) in order to determine the level of a characteristic ingredient in the gas produced through decomposition (oxygen, nitrogen, carbon dioxide, methane) and that the measurement components (10.1 to 10.3) are each connected to a measurement and control device (17) which controls the relevant shut-off valves (11.1 to 11.3) according to the signals supplied by the measurement components (10.1 to 10.3).

2. Device according to Claim 1, characterised in that the measurement components are sensors (10.1, 10.2, 10.3) located in the flow direction of the gas before or after each shut-off valve (11.1, 11.2, 11.3).

3. Device according to one of Claims 1 or 2, characterised in that the sensors (10.1, 10.2, 10.3) produce output signals which are proportional to the oxygen content and/or the nitrogen content of the methane or carbon dioxide content of the gas produced by decomposition.

4. Device in particular according to one of Claims 1 to 3, characterised in that the individual extraction lines (9.1, 9.2, 9.3) are connected to a common conveyor device (13) to which also the pressure line (14) leading to the consumers is connected and the collector (12), the conveyor device (13) and, if applicable, also the measurement and control device (17) are located in a building (20) independent of and located outside the disposal site.

5. Device according to Claim 4, characterised in that the gas extraction lines (9.1 to 9.3) are fed into the building from below.

6. Device according to Claim 4 or 5, characterised in that the building (20) is designed as a container (21).

7. Device according to one of Claims 1 to 6, characterised in that the shut-off valves (11.1 to 11.3) are located in the vicinity of the collector (12).

8. Device according to one of Claims 1 to 7, characterised in that the capacity of the conveyor device (13) is variable with the aid of the measurement and control device (17) according to given characteristic data.

9. Device according to one of Claims 1 to 8, characterised in that the volume of the gas fed in through the conveyor device (13) from the collector (12) to the pressure line (14) can be detected by a flow monitor (24) whose output signals are applied to the measurement and control device (17) to detect the consumption and that the data detected by this device can be transferred to an operations centre (30) via an external line (26), preferably in the form of digital signals.

10. Device according to one of Claims 1 to 9, characterised in that the capacity of the conveyor device (13) is variable by means of the measurement and control device (17) according to given characteristic data preferably applied through external lines (26) and that the measurement and control device (17) is equipped with an alarm facility (29) preferably integrated into the casing of the measurement and control device (17).

11. Process for controlling the extraction of gas from a waste disposal site with gas wells (8.1, 8.2, 8.3) located at various points within the waste material from which the gas produced by decomposition is extracted, collected and fed to the consumers, in particular with a device according to Claims 1 to 8, characterised in that the level of characteristic ingredients in the gas (e.g. oxygen, nitrogen, methane or carbon dioxide respectively) is measured continuously and the individual gas flows are controlled in relation to these measured proportional values so that if a given first critical value for an ingredient in the gas produced by decomposition is exceeded then the relevant individual gas flow is throttled and when a second given critical value is undercut the gas flow is increased so that after this measurement and control of the individual gas flows these are combined according to the values measured and are then fed under pressure to the consumers.

### Revendications

1. Dispositif pour aspirer des gaz de décomposition d'un dépôt de déchets, avec des déchets entreposés (7) et des puits de soutirage de gaz (8.1; 8.2; 8.3), disposés dans les déchets (7) en différents points, avec un certain écartement mutuel, chaque puits présentant une conduite de soutirage de gaz (9.1; 9.2; 9.3), munie d'un organe d'arrêt (11.1; 11.2; 11.3), caractérisé en ce que les organes d'arrêt réglables (11.1; 11.2; 11.3) de chaque conduite de soutirage (9.1 à 9.3) sont affectés à un collecteur (12), situé en dehors de la décharge (1), un élément de mesure au moins (10.1; 10.2; 10.3) étant prévu dans chaque conduite de soutirage (9.1 à 9.3) pour déterminer la teneur d'un constituant caractéristique des gaz de décomposition (oxygène, azote, dioxyde de carbone, méthane), et en ce que chaque élément de mesure (10.1 à 10.3) est relié à un dispositif de mesure et de régulation (17) qui pilote, en fonction des signaux délivrés par les éléments de mesure (10.1 à 10.3), les organes d'arrêt qui leur sont affectés (11.1 à 11.3).

2. Dispositif suivant la revendication 1, caractérisé en ce que les éléments de mesure sont des capteurs (10.1; 10.2; 10.3), disposés en amont ou en aval de chaque organe d'arrêt (11.1; 11.2; 11.3), dans le sens d'écoulement du flux de gaz.

3. Dispositif suivant l'une quelconque des revendications 1 et 2, caractérisé en ce que les capteurs (10.1; 10.2; 10.3) délivrent des signaux de sortie, proportionnels à la teneur en oxygène et/ou en azote et/ou en méthane ou en dioxyde de carbone des gaz de décomposition soutirés.

4. Dispositif suivant l'une quelconque des revendications 1 à 3 notamment, caractérisé en ce que les différentes conduites de soutirage (9.1; 9.2; 9.3) sont affectées à un dispositif de refoulement commun (13), auquel est également raccordée la conduite sous pression (14), alimentant les consommateurs, le collecteur (12), le dispositif de refoulement (13) et, éventuellement, le dispositif de mesure et de régulation (17) étant logés dans un bâtiment (20), externe à la décharge et indépendant de cette dernière.

5. Dispositif suivant la revendication 4, caractérisé en ce que les conduites de soutirage de gaz (9.1 à 9.3) sont introduites dans le bâtiment à partir du bas.

6. Dispositif suivant l'une des revendications 4 et 5, caractérisé en ce que le bâtiment (20) est réalisé sous forme de conteneur (21).

7. Dispositif suivant l'une quelconque des revendications 1 à 6, caractérisé en ce que les organes d'arrêt (11.1 à 11.3) sont disposés dans la zone du collecteur (12).

8. Dispositif suivant l'une quelconque des revendications 1 à 7, caractérisé en ce que le débit du dispositif de refoulement (13) est réglé par le dispositif de mesure et de régulation (17), suivant des caractéristiques prédéfinies.

9. Dispositif suivant l'une quelconque des revendications 1 à 8, caractérisé en ce que le volume de gaz, injecté dans la conduite sous pression (14) à partir du collecteur (12), par l'intermédiaire du dispositif de refoulement (13), est déterminé au moyen d'un débitmètre (24), dont les signaux de sortie sont transmis au dispositif de mesure et de régulation (17), en vue de déterminer la consommation, et en ce que les données, enregistrées par le dispositif précité, sont transmises à un centre de répartition (30), en numérique de préférence, par l'intermédiaire d'un circuit externe (26).

10. Dispositif suivant l'une quelconque des revendications 1 à 9, caractérisé en ce que le débit du dispositif de refoulement (13) est réglable par le dispositif de mesure et de régulation (17), d'après des caractéristiques prédéfinies, de préférence, par l'intermédiaire de circuits externes (26), et en ce qu'un dispositif d'alarme (29), intégré de préférence au boîtier du dispositif de mesure et de régulation (17), est affecté au dispositif précité (17).

11. Procédé pour contrôler le soutirage de gaz d'un dépôt de déchets, avec des puits de soutirage de gaz (8.1; 8.2; 8.3), disposés dans les déchets en différents points, avec un certain écartement mutuel, et à partir desquels les gaz de décomposition sont aspirés en flux individuels, collectés et transportés jusqu'aux consommateurs, par un dispositif suivant les revendications 1 à 8 notamment, caractérisé en ce que la teneur des gaz de décomposition en constituants caractéristiques (oxygène, azote, méthane et/ou dioxyde de carbone, par exemple) est mesurée en continu dans chaque flux de gaz individuel, les différents flux étant contrôlés, en fonction de ces pourcentages mesurés, de manière que le flux de gaz correspondant soit laminé, en cas de dépassement par le haut d'un premier seuil prédéfini d'un constituant du gaz de décomposition, et que le flux de gaz soit renforcé, en cas de dépassement par le bas d'un deuxième seuil prédéfini, et en ce que, après la mesure et le contrôle des différents flux de gaz, ces derniers sont réunis en fonction des valeurs relevées, puis transportés sous pression jusqu'aux consommateurs.

Fig. 1

EP 0 182 143 B1

Fig. 2